# FASCICULE DE BREVET EUROPEEN

(11) **EP 1 736 075 B1**
(45) Date de publication et mention de la délivrance du brevet: **16.12.2009**
(21) Numéro de dépôt: 06356076.7
(22) Date de dépôt: 23.06.2006
(51) Int. Cl.: A47B 96/14, F16S 3/00, A47B 57/40

(54) **Elément et montant d'un dispositif de support et dispositif de support**
Element und Pfosten von einer Stützvorrichtung und Stützvorrichtung
Element and upright of a supporting device and supporting device

(30) Priorité: 24.06.2005 FR 0506467
(43) Date de publication de la demande: 27.12.2006
(73) Titulaire: Gewiss France SAS, 21430 Liernais (FR)
(72) Inventeur: Leguy, Claude Hubert, 21430 Marcheseuil (FR)
(74) Mandataire: Schouller, Jean-Philippe

(56) Documents cités:
- EP-A- 1 308 111
- FR-A- 2 671 465
- US-A- 3 217 894

## Description

La présente invention se rapporte au domaine des dispositifs de support comprenant au moins un montant pourvu d'un ou plusieurs éléments rapportés, tels qu'une console, une tête de pendard ou une traverse. Plus précisément, elle concerne un tel élément, un montant d'un dispositif de support, ainsi qu'un dispositif de support, par exemple d'un rayonnage ou bien de « chemins pour câbles » ou « chemin de câbles », suspendus ou non.

Un chemin pour câbles est généralement constitué de goulottes mises à la suite et reposant sur une succession de consoles ou de traverses. Dans la plupart des cas, chacune de ces consoles ou de ces traverses est portée par un montant qui peut être fixé à un mur par des vis ou bien qui peut être un pendard suspendu à un plafond.

Il est connu de fixer l'élément de support, c'est-à-dire la console ou la traverse, sur le montant en utilisant une goupille. Le montant, réalisé par pliage d'une bande métallique, comporte alors un fond vertical et deux ailes latérales, qui sont reliées par ce fond et qui sont en regard. L'élément de support est inséré entre ces deux ailes latérales et appliqué contre le fond, après quoi au moins une goupille d'assemblage est installée de manière à maintenir assemblés le montant et l'élément de support en traversant à la fois les ailes latérales et cet élément de support.

Le système de fixation qui vient d'être décrit requiert des organes d'assemblage, à savoir les goupilles qui présentent un surcoût, qui doivent être achetées, réceptionnées, stockées puis transportées et dont la présence implique donc la gestion d'un stock de goupilles. Un autre inconvénient de ce système est que chaque montant ne peut supporter que des éléments de support tous dirigés dans la même direction à partir du fond du montant. Par ailleurs, une tête de pendard, servant à fixer le montant sous un plafond, ou une entretoise, destinée à être placée entre deux montants solidaires l'un de l'autre, doivent être fixés au(x) montant(s) à l'aide d'un système de fixation autre que celui décrit ci-dessus, si bien que plusieurs systèmes de fixation sont utilisés dans un même dispositif de support qui présente alors l'inconvénient d'être complexe.

Par ailleurs, il est connu de US-A-3,195,735 de constituer un dispositif de support d'un rayonnage en installant plusieurs consoles sur au moins deux montants qui sont fixés à un mur et dont chacun comporte une paroi avant séparée du mur par un espace libre. Chaque console est pourvue à chaque bout de deux crochets, dont chacun se termine par une extrémité libre dirigée vers le bas. A distance de ses deux bords latéraux, la paroi avant de chaque montant est percée de deux rangées verticales de fentes, dans deux desquelles sont insérés les crochets d'une console lors de l'accrochage de cette console au montant. Une fois les consoles accrochées aux montants, le rayonnage est posé sur ces consoles. Chaque console ne peut être orientée que selon une seule direction par rapport aux montants correspondants. En outre les crochets de chaque console sont susceptibles de sortir des fentes d'accrochage sous l'effet d'un effort vertical et dirigé vers le haut exercé sur la console.

Il est également connu de US-A-3,217,894 de fixer des éléments de support sur un montant d'un dispositif de support en insérant des organes en saillie de chaque élément dans des ouvertures du montant. Les ouvertures du montant sont disposées au niveau de deux plis longitudinaux adjacents du montant. Les éléments de support comportent, de part et d'autre de chaque organe en saillie, deux pans destinés à s'appuyer contre les faces du montant situées au voisinage du pli longitudinal qui comporte l'ouverture de réception de l'organe en saillie. Du fait de la présence de ces pans, les éléments de support ne peuvent être fixés sur un montant que selon deux orientations. En outre, comme dans le dispositif décrit précédemment, un effort vertical et dirigé vers le haut exercé sur un élément de support est susceptible d'extraire les organes en saillie de cet élément par rapport aux ouvertures correspondantes du montant.

De plus, EP-A-1 308 111 décrit un dispositif de support comprenant un montant et un élément de support apte à être accroché sur le montant. A cet effet, l'élément comporte au moins un crochet destiné à être inséré dans un évidement du montant, ainsi qu'un doigt de verrouillage de l'élément sur le montant. En particulier, chaque crochet définit une fente interne à l'élément, cette fente étant ouverte pour l'insertion d'un bord du montant lors de l'accrochage de l'élément. Dans ce dispositif, la fente définie par le crochet est droite et verticale dans la configuration d'accrochage de l'élément, en vue de recevoir un bord droit et vertical du montant. Or, un tel agencement de la fente impose une épaisseur calibrée du bord du montant, afin que celui-ci puisse être reçu et serré dans la fente.

L'invention a au moins pour but de sécuriser la fixation d'un élément de support sur un montant destiné à faire partie d'un dispositif de support, d'améliorer le serrage de l'élément sur le montant et d'augmenter le nombre de configurations de montage possibles sur un tel montant.

A cet effet, l'invention a pour objet un ensemble comprenant un montant d'un dispositif de support et au moins un élément à installer sur le montant, cet élément comprenant au moins un crochet à même d'être inséré dans un trou traversant du montant, l'élément comportant un doigt de verrouillage apte à être basculé entre une première position, dans laquelle ce doigt de verrouillage ne s'oppose pas au montage de l'élément sur le montant par accrochage du crochet, et une deuxième position, dans laquelle le doigt de verrouillage est à même d'empêcher le décrochage du crochet en pénétrant dans un trou du montant, le crochet définissant une rampe interne délimitant en partie une fente ouverte pour l'insertion d'un bord du montant lors de l'accrochage, caractérisé en ce que cette rampe interne s'étend, en regard d'une surface d'appui de l'élément sur le montant, jusqu'au fond de la fente ouverte et est inclinée de manière à se rapprocher de la surface d'appui lorsqu'on se dirige vers le fond de la fente.

D'autres caractéristiques avantageuses d'un ensemble conforme à l'invention sont définies dans les sous-revendications 2 à 14 du jeu de revendications annexé.

Enfin, l'invention a pour objet un dispositif de support comprenant un ensemble tel que décrit ci-dessus, l'élément étant accroché au montant par son crochet de montage qui passe dans le trou traversant du montant.

D'autres caractéristiques avantageuses d'un dispositif de support conforme à l'invention sont définies dans les sous-revendications 16 à 20 du jeu de revendications annexé.

L'invention sera bien comprise à la lecture de la description qui va suivre, donnée uniquement à titre d'exemple et faite en se référant aux dessins annexés, parmi desquels
- la figure 1 est une vue en perspective d'un pendard conforme à l'invention prévu pour supporter des tronçons de plusieurs chemins pour câbles ;
- la figure 2 est une vue partielle, éclatée, à plus grande échelle et en perspective, de plusieurs éléments constitutifs du pendard de la figure 1 ;
- la figure 3 est une vue partielle, en perspective, qui illustre une étape de l'assemblage des éléments représentés à la figure 2 ;
- la figure 4 est une vue analogue à la figure 3 et représente les mêmes éléments que cette figure 3 dont l'assemblage est achevé selon une disposition différente de celle visible à la figure 1, dans un souci de clarté ;
- la figure 5 est une vue analogue à la figure 1 et représente un autre pendard conforme à l'invention ;
- la figure 6 est une vue en perspective de la portion supérieure d'un autre pendard conforme à l'invention ;
- la figure 7 est également une vue en perspective de la portion supérieure d'un autre pendard conforme à l'invention ;
- la figure 8 est une vue en perspective d'un autre dispositif de support conforme à l'invention et destiné à supporter un chemin pour câbles ;
- la figure 9 est une vue en perspective d'une console conforme à l'invention et prête à poser, c'est-à-dire à être fixée par exemple sur un mur ;
- la figure 10 est une vue en perspective d'une console conforme à l'invention, destinée à être installée sur un montant du type de ceux représentés aux figures 1 à 9 ; et
- la figure 11 est une vue en perspective d'un dispositif, conforme à l'invention, de support d'un rayonnage.

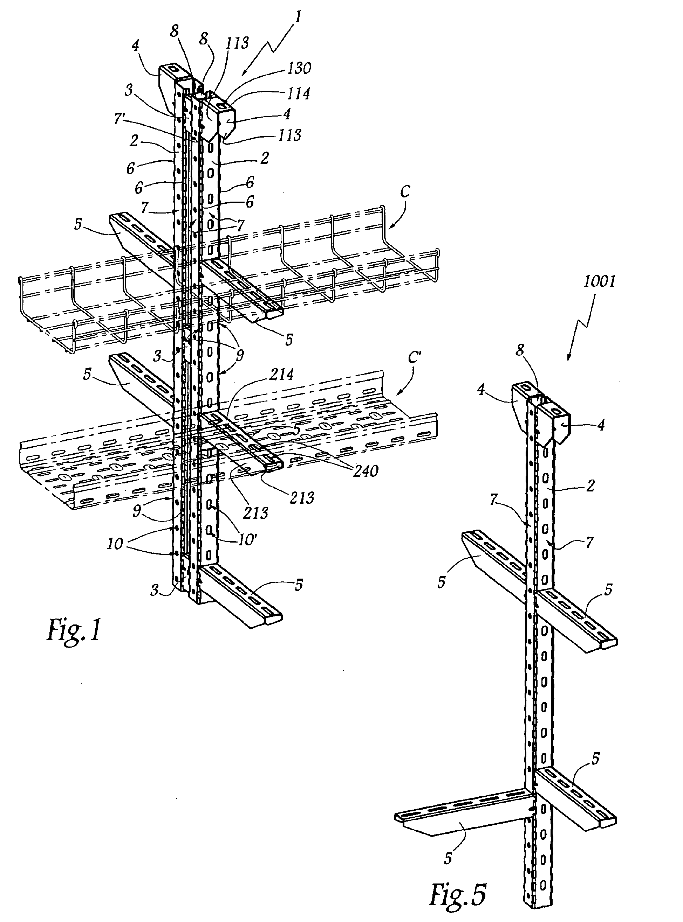

Sur la figure 1 est représenté un pendard 1 de support de plusieurs chemins pour câbles ou « chemin de câbles » dont seuls deux sont représentés, en traits mixtes, à la figure 1 uniquement, l'un C comme chemin pour câbles en fils métalliques, l'autre C' comme chemin pour câbles en tôle. Certains de ces chemins pour câbles sont destinés à cheminer les uns au-dessus des autres, tandis que d'autres sont destinés à être décalés latéralement entre eux. Ce pendard 1 résulte de l'assemblage sur chantier de deux montants sensiblement verticaux et identiques 2, de trois entretoises identiques 3, de deux têtes de fixation identiques 4 et de cinq consoles identiques 5.

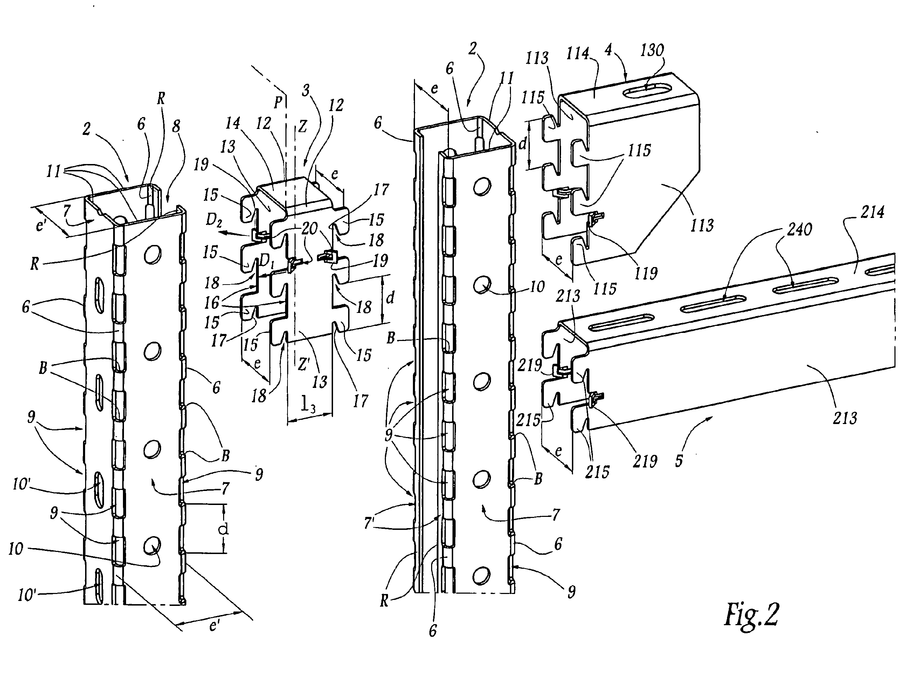

Ainsi qu'on peut mieux le voir à la figure 2, chaque montant 2 résulte du perçage et du pliage d'un flan métallique ayant, à l'origine, la forme d'une bande plate. Plus précisément, chaque montant 2 comporte plusieurs plis longitudinaux 6 et plusieurs faces planes 7 et 7'. La concavité de chaque pli 6 est tournée vers l'intérieur du montant 2 correspondant. Comme les plis 6 sont parallèles entre eux, chaque montant 2 présente la forme d'un profilé ayant une section transversale sensiblement constante. Dans l'exemple représenté, les plis 6 sont au nombre de quatre, sont formés à angle droit et sont disposés à intervalles réguliers, si bien que cette section est sensiblement carrée. La face 7' se distingue des trois autres faces 7 en ce qu'elle est interrompue par une fente longitudinale 8 qui s'étend sur toute la hauteur du montant 2 correspondant et qui est délimitée par deux rebords B dirigés l'un vers l'autre.

Chaque montant 2 est simple, peu coûteux, léger, robuste et fiable, ce qui est avantageux.

Selon une variante non représentée de l'invention, toutes les faces du montant 2 peuvent être pleines.

Dans chaque pli 6 est ménagée une rangée d'encoches extérieures, dont chacune présente la forme d'un trou traversant et, plus précisément, d'une fente longitudinale 9. Dans l'exemple représenté, chaque rangée de fentes 9 d'un montant 2 s'étend sur toute la longueur de ce montant 2.

Des trous 10 ou 10' pour le passage d'organes de fixation non représentés tels que des vis ou des boulons sont ménagés dans chaque parois 11 définissant une face 7, c'est-à-dire dans chaque paroi 11 reliant deux plis 6 consécutifs entre eux. Dans l'exemple représenté, les trous 10 percés dans une paroi 11 sont disposés à intervalles réguliers, selon une rangée longitudinale. Il en est de même des trous 10', qui présentent en outre la particularité d'être en regard de la fente 8 et celle d'être allongés parallèlement à la direction longitudinale du montant 2 correspondant. Les trous 10 sont percés dans les deux parois 11 en regard, de manière à former des paires de trous co-axiaux.

Sur la figure 2 est également représentée une seule entretoise 3, à laquelle sont identiques les autres entretoises 3. Cette entretoise 3 résulte du découpage, du perçage et du pliage d'un flan métallique. Elle comporte deux plis 12 et deux ailes latérales 13, en regard et parallèles entre elles, dont chacune s'étend verticalement à partir d'un des plis 12. Chaque pli 12 est formé entre une aile 13 et un pontet 14, qui relie les ailes 13 entre elles. Ces ailes 13 sont pourvues de deux rangées de paires de crochets 15 identiques. Les crochets 15 de l'une de ces deux rangées sont disposés à l'opposé des crochets 15 de l'autre rangée et font saillie dans la direction opposée au crochet 15 de cette autre rangée. Les deux crochets 15 d'une même paire se trouvent à la même hauteur. Les extrémités libres de tous les crochets 15 sont dirigés dans la même direction verticale, à savoir vers le bas à la figure 2, étant entendu qu'elles peuvent être dirigées vers le haut moyennant une rotation de l'entretoise 3 d'un demi-tour autour d'un axe horizontal.

Chaque crochet 15 est dans le prolongement d'une aile 13. Il résulte uniquement du découpage du flan métallique qui est ensuite plié pour former l'entretoise 3. En d'autres termes, sa réalisation ne nécessite aucune autre opération que ce découpage. De plus, les positions des crochets. 15 par rapport au reste de l'entretoise 3 sont précises.

Chaque crochet 15 est défini par une portion plane de flan. Il est destiné à être principalement sollicité selon une ou plusieurs directions sensiblement contenues dans un plan vertical, qui est le plan de cette portion de flan. Chaque crochet 15 peut donc être aisément découpé de manière à être robuste dans la ou les directions selon lesquelles il est destiné à être sollicité.

L'entretoise 3 définit deux surfaces d'appui 16, dont chacune est destinée à s'appliquer sur une face 7 ou 7' d'un montant 2 et s'étend dans un plan vertical P. Chaque surface d'appui 16 est constituée d'un bord du pontet 14, de portions d'un des deux bords latéraux de l'une des ailes 13 et de portions d'un des deux bords latéraux de l'autre aile 13. Chaque crochet 15 s'étend à partir d'une surface d'appui 16, par rapport à laquelle il est en saillie dans une direction D₁ sensiblement perpendiculaire au plan P de cette surface d'appui. Le bord interne de chaque crochet 15 présente la forme d'une rampe 17, avec laquelle une surface d'appui 16 délimite une fente verticale 18 ouverte vers le bas Lorsque l'entretoise est dans la position des figures 1 à 4. Cette fente peut également être ouverte vers le haut moyennant une rotation de l'entretoise 3 d'un demi-tour autour d'un axe horizontal. Chaque rampe 17 et la surface d'appui 16 avec laquelle elle définit une fente 18 sont inclinées l'une par rapport à l'autre de manière à se rapprocher l'une de l'autre lorsqu'on se dirige vers le fond de cette fente 18.

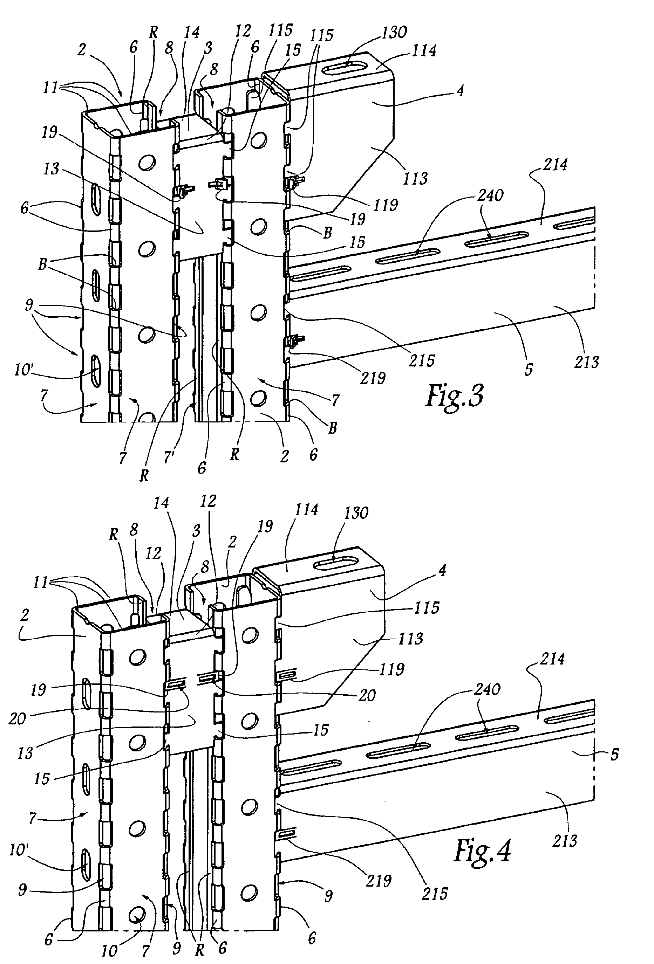

Outre les crochets 15, les deux ailes 13 portent deux paires de doigts de verrouillage 19. Chaque doigt de verrouillage 19 présente la forme d'une languette, dans laquelle est ménagé un trou traversant en forme de fente 20 pour le passage d'un outil. Chaque doigt 19 est adjacent à un crochet 15 et peut être basculé autour d'un axe sensiblement vertical Z-Z' depuis sa position de la figure 2 jusqu'à une position de verrouillage illustrée à la figure 4. Dans la position de la figure 2, chaque doigt 19 est en saillie dans une direction D₂ non parallèle à la direction D₁. En d'autres termes, chaque doigt 19 est angulairement décalé des crochets 15. L'axe de basculement Z-Z' est parallèle au plan P, en pouvant même être contenu dans ce plan P. Il est également parallèle au plan des ailes 13, qui sont également les plans des crochets 15.

Chaque doigt 19 est juxtaposé à un crochet 15 et se trouve à l'opposé de la fente 18 délimitée par ce crochet 15.

Comme les ailes 13, les deux crochets 15 d'une même paire ont un écartement e qui est le même que l'écartement e' de deux plis 6 consécutifs, c'est-à-dire de celui de deux rangées consécutives de fentes 9. L'écartement des deux doigts de verrouillage 19 d'une même paire a la même valeur que l'écartement e.

Deux crochets 15 consécutifs présentent un décalage vertical d qui est le même que celui entre deux fentes consécutives 9 d'une même rangée.

Les têtes 4 sont destinées à permettre la fixation d'un pendard suspendu à un plafond ou à une structure analogue. Chacune d'elles est réalisée par découpe, perçage et pliage d'un flan métallique et comprend deux ailes latérales en regard 113, qui sont parallèles entre elles et qu'un pontet 114 relie l'une à l'autre. Ce pontet 114 est percé d'un trou oblong 130 pour le passage d'un organe, non représenté, de fixation de la tête 4 sur une surface tournée vers le bas, telle qu'un plafond.

Ainsi qu'on peut le voir à la figure 2, les deux ailes 113 portent une rangée de trois paires de crochets 115 identiques aux crochets 15. Les deux crochets 115 d'une même paire ont le même écartement e que les deux crochets 15 d'une même paire de l'entretoise 3, cet écartement étant également égal à l'écartement e' entre deux plis 6 consécutifs. Les paires consécutives de crochets 115 ont toutes le même décalage vertical, qui est égal au décalage d entre les paires consécutives de crochets 15. Les extrémités libres des crochets 115 sont dirigées vers le haut, à moins d'utiliser la tête 4 comme un pied de support et non comme une tête de suspension.

Les ailes 113 sont en outre pourvues d'une paire de doigts de verrouillage 119, qui sont identiques aux doigts 19 et qui ont la même disposition que ces doigts 19 par rapport à l'une des paires de crochet.

Comme les têtes 4, chaque console 5 comporte deux ailes latérales en regard 213, qui sont parallèles entre elles et reliées par un pontet supérieur 214. Les ailes 213 et le pontet 214 sont allongés selon une direction horizontale, qui est la direction longitudinale de la console 5 dont ils font partie. De manière connue, le pontet 214 est percé d'une rangée de trous oblongs 240 pour le passage d'organes de fixation d'un chemin pour câbles sur la console 5 dont il fait partie. Ces organes de fixation, non représentés dans un souci de clarté, peuvent être des vis de boulons, étant entendu que d'autres systèmes de fixation peuvent être prévus, auquel cas ils peuvent compléter ou bien remplacer les trous 240.

A l'une des deux extrémités de la console 5 dont elles font parties, les deux ailes 113 sont pourvues d'une rangée verticale de paire de crochet 215 identiques aux crochets 15 et 115 et ayant le même écartement e. Ces crochets 215 sont disposés comme les crochets 15 et 115, à ceci près que, dans l'exemple représenté, chaque console 5 ne comporte que deux paires de crochets 215, alors qu'il y a trois paires de crochets 115 sur la tête 4 et que, sur l'entretoise 3, les paires de crochets 15 d'une même rangée sont au nombre de trois. Bien entendu, chaque console 5 peut être pourvue de plus de deux paires de crochets 215. Chaque console 5 peut également n'être dotée que d'une seule paire de crochets 215, même s'il est avantageux que plusieurs paires de crochets 215 soient prévus.

Comme les ailes 113, les ailes 213 portent une paire de doigts de verrouillage, qui sont référencés 219 et sont identiques aux doigts 19. Ces doigts 219 sont disposés comme les doigts 119 par rapport à une paire de crochets.

Pour assembler les éléments représentés à la figure 2, on commence par introduire les crochets 15, 115 et 215 dans des fentes 9 des montants 2. Ensuite, on fait coulisser l'entretoise 3, la tête 4 et la console 5 verticalement, le long des montants 2, de telle manière que le bord B d'une fente 9 s'insère dans chaque fente 18 de l'entretoise 3 et dans chaque fente analogue de la tête 4 et de la console 5, ce qui mène à l'état illustré à la figure 3. Lorsque cet état est atteint, on fait basculer chaque doigt 19, 119 ou 219 vers un montant 2, jusqu'à le faire pénétrer dans une fente 9 par laquelle le crochet adjacent 15, 115 ou 215 passe déjà à travers une paroi 11. Les doigts 19, 119 et 219 sont très accessibles. Leurs basculements jusque dans des fentes 9 sont donc aisés à réaliser. Pour les effectuer, on peut utiliser un outil que l'on enfile dans la fente du doigt de verrouillage 19, 119 ou 219 que l'on veut faire basculer par déformation plastique jusqu'à sa position de verrouillage, qui est celle de la figure 4. Cet outil peut être la pointe d'un tourne-vis plat.

Sur cette figure 4, les doigts 19, en saillie sensiblement dans la même direction D1 que les crochets 15, les doigts 119 et les doigts 219 verrouillent · l'entretoise 3, la tête 4 et la console 5 sur les montants 2 en empêchant leur coulissement vertical par rapport à ces montants 2 et donc en empêchant que les crochets 15, 115 et 215 puissent être extraits des fentes 9. En particulier, même s'il est dirigé vers le haut, un choc appliqué sur une console 5 ne peut désolidariser cette dernière du montant 2 qui la porte. L'entretoise 3, la tête 4 et la console 5 sont montées sur les montants 2 de manière robuste et fiable, tandis que leur installation a été particulièrement aisée et rapide, ce qui est avantageux.

L'entretoise 3, la tête 4 et la console 5 sont fixées sur les montants 2 sans faire usage d'organes d'assemblage supplémentaires, ce qui se traduit par un moindre coût et par une simplification quant au stockage et au transport des pièces nécessaires à l'installation d'un chemin pour câbles. La fixation de l'entretoise 3, de la tête 4 et de la console 5 s'effectue en outre sans soudage.

Par ailleurs, les crochets 15, 115 et 215 exercent une traction sur les montants 2 au niveau de plis 6, c'est-à-dire là où les flans formant ces montants 2 sont les plus robustes, ce qui est avantageux.

Dans l'exemple représenté, chaque doigt 19, 119 ou 219 pénètre dans une même fente 9 qu'un crochet 15, 115 ou 215, ce qui est avantageux en termes de compacité et de robustesse du verrouillage. Il peut toutefois en être autrement.

Grâce à sa disposition au niveau d'un pli 6, chaque fente 9 possède un bord B qui peut à la fois servir à l'accrochage d'un crochet 15, 115 ou 215 et bloquer verticalement un doigt 19, 119 ou 219. Chaque bord B peut donc remplir deux fonctions, ce qui présente l'avantage de permettre une réduction des perçages du montant 2.

Les extrémités libres des crochets 15, 115 et 215 sont dirigées de telle manière que le chargement de la ou des consoles 5 tende à enfoncer, dans les fentes 18 et les fentes analogues, les bords B engagés dans ces fentes. Du fait de leur inclinaison, les rampes 17 dirigent alors les surfaces d'appui 16 et les surfaces analogues de la tête 4 et de la console 5 contre les surfaces d'appui 7 et/ou 7', ce qui tend à améliorer la robustesse et la rigidité de la fixation de l'entretoise 3, de la tête 4 et la console 5 sur les montants 2.

Le même principe de solidarisation est utilisé pour fixer l'entretoise 3, la tête 4 et la console 5 sur les montants 2. Cela présente l'avantage de se traduire par de nombreuses simplifications notamment en ce qui concerne chaque montant 2, l'outillage nécessaire au montage de l'entretoise 3, de la tête 4 et de la console 5, ainsi que le mode opératoire employé pour ce montage.

Le fait que les différents éléments d'un pendard ou d'un autre dispositif de support soient maintenus assemblés en utilisant le même principe de solidarisation confère en outre un très large éventail de choix quant à la conception de ce dispositif de support, dont la modularité est alors un avantage.

Le fait que chaque montant comporte plus de deux plis 6 et plus de deux rangées de fente 9 augmente encore ce large éventail de choix de conception, qu'illustre une comparaison des figures 1 et 5 à 10.

Sur la figure 1, trois entretoises 3 maintiennent assemblés deux montants 2 du pendard 1, de telle manière que les fentes 8 de ces montants 2 soient en regard. Chaque montant 2 est pourvu de l'une de deux têtes 4 disposées à l'opposée l'une de l'autre, par lesquelles le pendard 1 est destiné à être fixé et suspendu à un plafond ou analogue. L'un des deux montants 2 porte trois consoles 5 disposées les unes au-dessus des autres et toutes dirigées dans la même direction. A l'opposé de ces trois consoles 5, l'autre montant 2 porte deux autres consoles 5. Les consoles 5 équipant l'un des montants 2 sont dirigés à l'opposé des consoles 5 portées par l'autre montant 2. Le pendard 1 peut supporter plusieurs chemins pour câbles cheminant parallèlement les uns au-dessus des autres ou les uns à côté des autres, de chaque côté des montants 2.

Sur la figure 5 est représenté un autre pendard conforme à l'invention. Il est référencé 1001 et résulte de l'assemblage sur chantier d'un montant 2, de deux têtes 4 et de quatre consoles 5. Les têtes 4 sont fixées à l'opposé l'une de l'autre, sur l'extrémité supérieure de l'unique montant 2, qui porte les quatre consoles 5. L'une des têtes 4 est fixée sur la face 7' du montant 2 et s'oppose à un écartement de la fente 8. Les consoles 5 sont fixées sur trois des quatre faces 7 et 7' du montant 2 et pourraient également être fixées sur ces quatre faces. Elles sont donc dirigées dans trois directions différentes et perpendiculaires entre elles. On notera que, comme elle se trouve au niveau d'un pli 6, c'est-à-dire à la jonction de deux faces successives 7 ou 7 et 7', chaque fente 9 peut servir à la fixation d'une console 5, d'une entretoise 3 ou d'une tête 4 sur n'importe laquelle de ces deux faces successives, ceci en utilisant le caractère carré de la section d'un montant 2, la distance entre deux plis 6 adjacents étant la même pour tous les plis.

En outre, la longueur l₃ d'une entretoise 3, prise entre ses surfaces d'appui 16 est sensiblement égale à l'écartement e', de telle sorte qu'une tête 4 ou une console 5 peut être monté sur le pendard 1 avec ses crochets 115 ou 215 engagés dans les fentes 9 des deux séries de fentes dans lesquelles sont déjà en place les crochets 15 de l'entretoise. Ceci permet d'équilibrer la résultante du poids des objets supportés par la console ou du poids de l'ensemble suspendu par rapport aux deux montants du pendard.

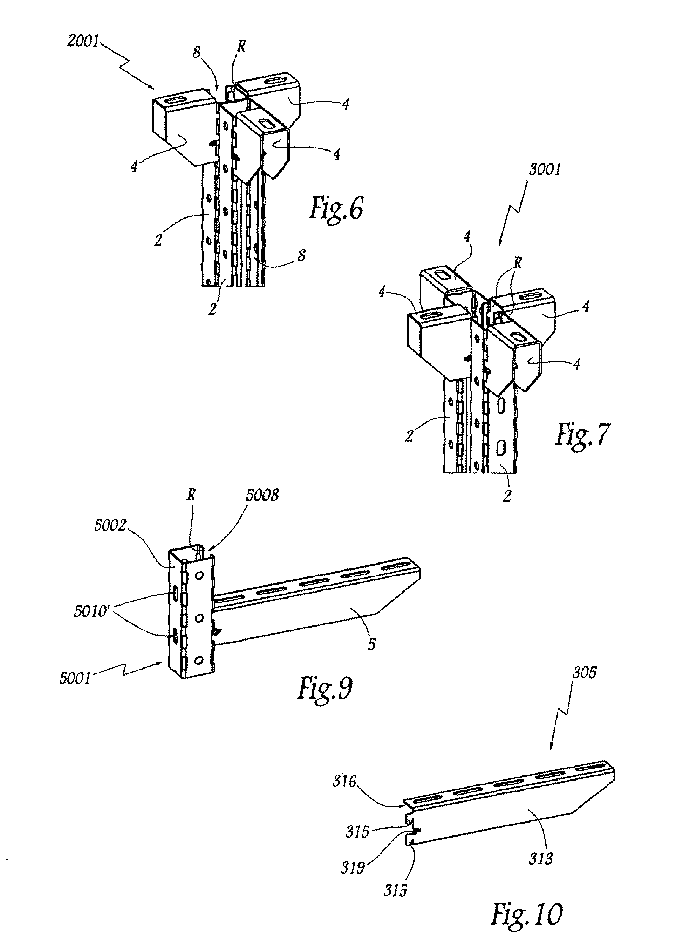

Sur la figure 6 est représentée l'extrémité supérieure d'un autre pendard conforme à l'invention. Il est référencé 2001 et comporte deux montants 2 accolés et maintenus assemblés de manière classique, par exemple par soudage ou bien en utilisant des boulons, autrement qu'à l'aide d'entretoises 3. Lorsque de tels boulons sont employés, ils peuvent être aisément manoeuvrés à l'aide d'outils passés dans les fentes 8 des montants 2. Le pendard 2001 est destiné à être suspendu par trois têtes 4, dont une est fixée sur l'un des montants 2, à l'opposé de l'autre montant 2. Les deux autres têtes 4 sont fixées à l'opposé l'une de l'autre, sur cet autre montant 2. Les têtes 4 sont fixées sur trois faces 7 et 7', dont une est perpendiculaire aux deux autres.

Sur la figure 7, la référence 3001 désigne un autre pendard conforme à l'invention, dont seule l'extrémité supérieure est représentée. Ce pendard 3001 comporte deux montants 2 maintenus assemblés par une ou plusieurs entretoises 3 non visibles et par deux têtes 4, qui sont disposées à l'opposé l'une de l'autre, entre les montants 2, à la manière d'entretoises. Chaque montant 2 est pourvu en outre de l'une de deux autres têtes 4, également disposées à l'opposé l'une de l'autre. Les têtes 4, dont deux sont perpendiculaires aux deux autres, sont donc disposées en étoile.

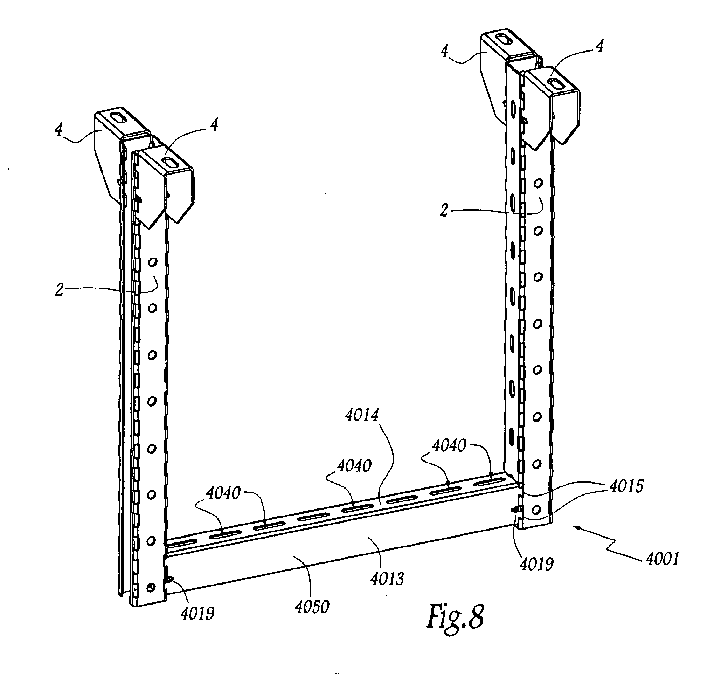

Sur la figure 8, la référence 4001 désigne un dispositif qui est conforme à l'invention et qui est destiné à supporter un ou plusieurs chemins pour câbles suspendus. Ce dispositif 4001 comporte deux montants 2 écartés l'un de l'autre, qu'une traverse 4050 relie l'un à l'autre. Comme les consoles 5, cette traverse 4050 est réalisée à partir d'un flan métallique et comporte deux ailes latérales 4013, ainsi qu'un pontet supérieur 4014, qui relie ces ailes 4013 entre elles et qui est percé d'une rangée de trous oblongs 4040 pour le passage d'organes d'assemblage non représentés dans un souci de clarté. Les deux extrémités de la traverse 4050 sont identiques à celle par laquelle une console 5 peut être fixée à un montant 2. Chacune de ces deux extrémités est donc accrochée à un montant 2 par deux crochets 4015 et verrouillée à l'aide de deux doigts 4019 de manière à ne pas pouvoir être décrochée, comme peut l'être une console 5. L'extrémité supérieure de chaque montant 2 constitutif du dispositif 4001 est pourvue de deux têtes 4 fixées à l'opposé l'une de l'autre.

Sur la figure 9, la référence 5001 désigne une console conforme à l'invention. Cette console 5001 résulte de l'assemblage en usine ou sur chantier d'une console 5 et d'un montant 5002, qui ne se distingue d'un montant 2 que par sa faible longueur. Les références 5008 et 5010' désignent respectivement la fente analogue à la fente 8 et les trous analogues aux trous 10'. La console 5 est fixée devant la fente 5008, sur les rebords qui délimitent cette fente, qu'elle empêche ainsi de s'élargir. Le montant 5002 est destiné à être fixé sur un mur à l'aide d'organes enfilés dans les trous 5010', tels que des vis non représentées. Le vissage de telles vis dans le mur peut être aisément effectué à l'aide d'un tournevis pénétrant dans le montant 5002 par la fente 5008.

Sur la figure 10 est représentée une console 305 conforme à l'invention. Dans ce qui suit, on ne décrit que ce qui la distingue de la console 5. En outre, une référence utilisée ci-après pour désigner une partie de la console 305 semblable ou équivalente à une partie référencée de la console 5 est construite en augmentant de 100 la référence repérant cette partie sur la console 5.

La console 305 ne comporte qu'une seule aile latérale 313 portant une rangée verticale de deux crochets 315 et un doigt de verrouillage 319. La référence 316 désigne une surface d'appui ayant la même fonction que la surface d'appui 16.

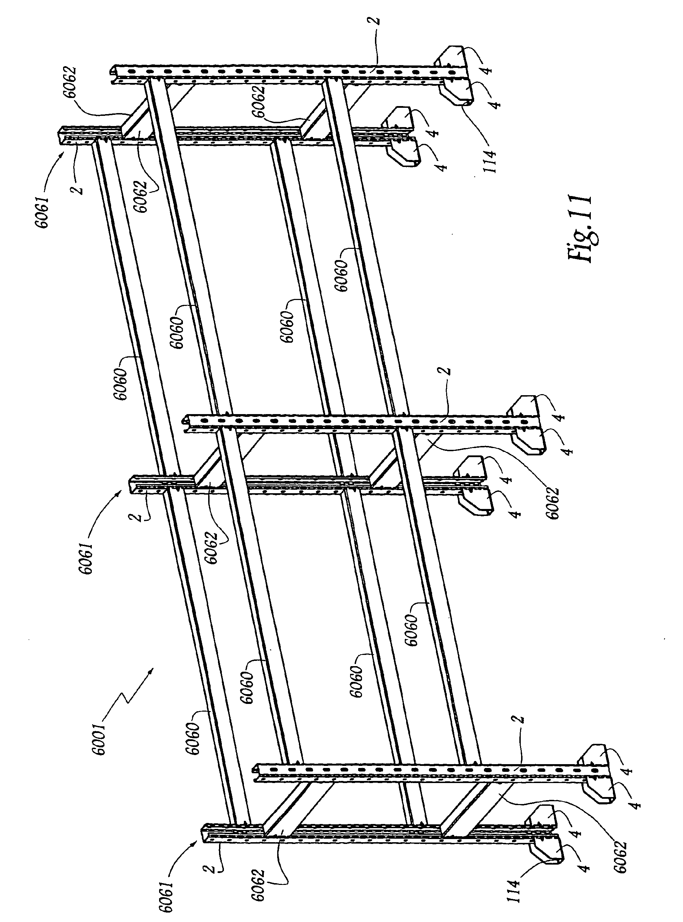

Sur la figure 11, la référence 6001 désigne un dispositif de support d'un rayonnage non représenté dans un souci de clarté. Ce dispositif 6001 résulte de l'assemblage de longerons 6060 et d'échelles 6061, qui sont au nombre de trois dans l'exemple représenté. Deux échelles 6061 consécutives sont reliées et maintenues assemblées par une paire haute et une paire basse de longerons 6060 parallèles. Chaque longeron 6060 est identique à une traverse 4050 décrite précédemment sauf en ce qu'il est plus long qu'une telle traverse 4050 et en ce qu'il est dépourvu de trous analogues aux trous 4040. Chaque échelle 6061 résulte de l'assemblage de deux montants 2, de plusieurs traverses 6062 et de plusieurs pieds 4 identiques aux têtes 4. Les traverses 6062 ne se distinguent que par leur longueur des longerons 6060, qui sont plus long qu'elles. Des crochets et des doigts de verrouillage analogues à ceux décrits ci-dessus équipent les longerons 6060 et les traverses 6062 qui sont fixés sur les montants 2 de la même manière que peut l'être une console 5.

Outre qu'elles maintiennent assemblés les montants 2 des échelles 6061, les traverses 6062 ont pour fonction de supporter les étagères non représentées du rayonnage.

Une paire de pied 4 équipe l'extrémité inférieure de chaque montant 2 du dispositif 6001, qui est destiné à reposer sur le sol et non à être suspendu. Les pieds du dispositif 6001 se distinguent des têtes 4 en ce que les extrémités libres de leurs crochets sont dirigées dans la direction opposée à leurs pontets 114.

L'invention a été représentée avec des doigts de verrouillage 19, 119, 219, 319, 4019 percés chacun d'un trou de passage d'un outil. Elle est cependant applicable avec des doigt de verrouillage en forme de languette pleine, ces languettes pouvant alors être rabattues au marteau vers leur position de verrouillage des crochets 15, 115, 215, 315, 4015.

## Revendications

1. Ensemble comprenant un montant (2 ; 5002) d'un dispositif de support et au moins un élément (3 ; 4 ; 5 ; 305 ; 9050 ; 6060 ; 6062) à installer sur le montant (2 ; 5002), ledit élément comprenant au moins un crochet (15 ; 115 ; 215 ; 315 ; 4015) à même d'être inséré dans un trou traversant (9) du montant (2 ; 5002), ledit élément comportant un doigt de verrouillage (19 ; 119 ; 219 ; 319 ; 4019) apte à être basculé entre une première position (figures 2 et 3), dans laquelle ce doigt de verrouillage (19 ; 119 ; 219 ; 319 ; 4019) ne s'oppose pas au montage de l'élément sur le montant (2 ; 5002) par accrochage du crochet, et une deuxième position (figure 4), dans laquelle le doigt de verrouillage (19 ; 119 ; 219 ; 319 ; 4019) est à même d'empêcher le décrochage du crochet (15 ; 115 ; 215 ; 315 ; 4015) en pénétrant dans un trou (9) du montant (2 ; 5002), le crochet (15 ; 115 ; 215 ; 315 ; 4015) définissant une rampe interne (17) délimitant en partie une fente ouverte (18) pour l'insertion d'un bord (B) du montant (2 ; 5002) lors de l'accrochage, **caractérisé en ce que** cette rampe interne (17) s'étend, en regard d'une surface d'appui (16 ; 316) de l'élément sur le montant, jusqu'au fond de la fente ouverte (18) et est inclinée de manière à se rapprocher de la surface d'appui (16 ; 316) lorsqu'on se dirige vers le fond de la fente (18).

2. Ensemble selon la revendication 1, **caractérisé en ce que** l'élément (3 ; 4 ; 5 ; 305 ; 9050 ; 6060 ; 6062) est réalisé à partir d'au moins un flan métallique mis en forme de manière à définir le crochet (15 ; 115 ; 215 ; 315 ; 4015), le doigt de verrouillage (19 ; 119 ; 219 ; 319 ; 4019) et au moins une aile (13 ; 113 ; 213 ; 313 ; 4013) qui se prolonge par le crochet (15 ; 115 ; 215 ; 315 ; 4015) et par le doigt de verrouillage (19 ; 119 ; 219 ; 319 ; 4019).

3. Ensemble selon l'une quelconque des revendications 1 et 2, **caractérisé en ce que**, dans sa deuxième position, le doigt de verrouillage (19 ; 119 ; 219 ; 319 ; 4019) est en saillie sensiblement dans la même direction (D₁) que le crochet (15 ; 115 ; 215 ; 315 ; 4015).

4. Ensemble selon la revendication 2, **caractérisé en ce que** l'aile possède un bord qui fait partie d'une surface (16 ; 316) d'appui sur le montant et par rapport auquel le crochet (15 ; 115 ; 215 ; 315 ; 4015) et le doigt de verrouillage (19 ; 119 ; 219 ; 319 ; 4019) sont en saillie.

5. Ensemble selon l'une quelconque des revendications précédentes, **caractérisé en ce que** le doigt de verrouillage présente la forme d'une languette dans laquelle est percé un trou (20) pour le passage d'un outil de manoeuvre de ce doigt (19 ; 119 ; 219 ; 319 ; 4019) de sa première à sa deuxième position.

6. Ensemble selon l'une quelconque des revendications précédentes, **caractérisé en ce que** le crochet (15 ; 115 ; 215 ; 315 ; 4015) et le doigt de verrouillage (19 ; 119 ; 219 ; 319 ; 4019) sont juxtaposés, de manière à pouvoir pénétrer ensemble dans un même trou (9) du montant (2 ; 5002).

7. Ensemble selon l'une quelconque des revendications précédentes, **caractérisé en ce que** l'élément (3 ; 4 ; 5 ; 305 ; 4050 ; 6060 ; 6062) comporte un autre crochet (15 ; 115 ; 215 ; 4015) pour son montage sur le montant (2 ; 5002), l'un et l'autre crochet étant décalés latéralement l'un de l'autre et saillant sensiblement dans la même direction (D₁) .

8. Ensemble selon l'une quelconque des revendications précédentes, **caractérisé en ce que** le montant (2 ; 5002) comprend un flan métallique allongé qui comporte au moins un premier et un deuxième plis longitudinaux (6) et au moins un premier et un deuxième trous traversants (9), ménagés respectivement dans lesdits premier et deuxième plis longitudinaux (6) et destinés chacun à l'insertion d'un crochet de montage (15 ; 115 ; 215 ; 315 ; 4015) d'un élément rapporté (3 ; 4 ; 5 ; 305 ; 9050 ; 6060 ; 6062), le flan métallique comprenant au moins un troisième pli longitudinal (6) dans lequel est ménagé un troisième trou traversant (9) pour l'insertion au moins d'un crochet de montage (15 ; 115 ; 215 ; 315 ; 4015) d'un autre élément rapporté (3 ; 4 ; 5 ; 305 ; 4050 ; 6060 ; 6062).

9. Ensemble selon la revendication 8, **caractérisé en ce que** le montant (2 ; 5002) possède au moins des première et deuxième faces extérieures (7, 7') qui sont reliées par le premier pli (6) et dont chacune forme une surface d'appui pour un élément rapporté (3 ; 4 ; 5 ; 305 ; 4050 ; 6060 ; 6062) accroché à l'aide d'un crochet de montage (15 ; 115 ; 215 ; 315 ; 4015) passant dans ledit premier trou traversant, ladite première face (7, 7') étant située entre les premier et deuxième plis (6), ladite deuxième face (7, 7') étant située entre les premier et troisième plis (6).

10. Ensemble selon l'une quelconque des revendications précédentes, **caractérisé en ce que** le montant (2 ; 5002) comprend au moins une encoche (9) d'insertion d'un doigt de verrouillage (19 ; 119 ; 219 ; 319 ; 4019) dudit élément rapporté (3 ; 4 : 5 ; 305 ; 4050 ; 6060, 6062).

11. Ensemble selon la revendication 10, **caractérisé en ce que** l'encoche est formée par ledit trou traversant (9) pour l'insertion du crochet de montage (15 ; 115 ; 215 ; 315 ; 4015).

12. Ensemble selon l'une quelconque des revendications 8 à 11, **caractérisé en ce que** le montant (2 ; 5002) comprend quatre plis longitudinaux (6) dans chacun desquels est ménagé au moins un trou traversant (9).

13. Ensemble selon l'une quelconque des revendications 8 à 12, **caractérisé en ce que** l'écartement (e') entre deux plis consécutifs est identique pour tous les plis.

14. Ensemble selon l'une quelconque des revendications 8 à 13, **caractérisé en ce que** ledit trou traversant (9) fait partie d'une rangée de trous traversants identiques (9) ménagés dans le pli longitudinal (6) .

15. Dispositif de support, **caractérisé en ce qu'**il comprend un ensemble selon l'une quelconque des revendications précédentes, l'élément étant accroché audit montant (2 ; 5002) par son crochet de montage (15 ; 115 ; 215 ; 315 ; 4015) qui passe dans ledit trou traversant (9) du montant.

16. Dispositif de support selon la revendication 15, **caractérisé en ce qu'**une fois le crochet (15 ; 115 ; 215 ; 315 ; 4015) de l'élément (3 ; 4 ; 5 ; 305 ; 4050 ; 6060 ; 6062) accroché au bord (B), le doigt de verrouillage (19 ; 119 ; 219 ; 319 ; 4019) dudit élément est à même d'être basculé vers sa deuxième position, jusqu'à pénétrer dans un trou (9) du montant (2 ; 5002) de manière à empêcher le décrochage du crochet (15 ; 115 ; 215 ; 315 ; 4015).

17. Dispositif selon l'une quelconque des revendications 15 et 16, **caractérisé en ce que** l'ensemble est selon la revendication 11, le crochet (15 ; 115 ; 215 ; 315 ; 4015) et le doigt de verrouillage (19 ; 119 ; 219 ; 319 ; 4019) étant à même de pénétrer ensemble dans le trou traversant formant encoche (9) du montant (2 ; 5002).

18. Dispositif selon l'une quelconque des revendications 15 à 17, **caractérisé en ce qu'**il comporte un premier et un deuxième éléments (3 ; 4 ; 5 ; 305 ; 4050 ; 6060 ; 6062), l'un et l'autre élément (3 ; 4 ; 5 ; 305 ; 4050 ; 6060 ; 6062) faisant partie de deux catégories différentes choisies parmi les consoles, les entretoises à placer entre deux montants, les têtes de fixation d'un pendard sous une structure, les pieds, les longerons et les traverses, l'un et l'autre élément étant à même d'être montés au même endroit sur le montant (2 ; 5002) et sensiblement de la même manière, chacun par accrochage de son crochet (15 ; 115 ; 215 ; 315 ; 4015) au bord (B) dudit trou traversant (9) et par insertion de son doigt de verrouillage (19 ; 119 ; 219 ; 319 ; 4019) dans un trou (9) du montant.

19. Dispositif selon l'une des revendications 15 à 18, dans lequel l'ensemble est selon les revendications 7 et 8, **caractérisé en ce que** la distance (e) entre lesdits crochets (15 ; 115 ; 215 ; 4019) est sensiblement égale à l'écartement (e') entre les premier et deuxième plis (6).

20. Dispositif selon la revendication 19, **caractérisé en ce que** ledit élément est une entretoise (3) dont la longueur (l₃), à part ses crochets (15), est sensiblement égale à l'écartement (e') entre deux plis voisins (6).

## Claims

1. Assembly comprising an upright (2; 5002) of a supporting device and at least one element (3; 4; 5; 305; 4050; 6060; 6062) to be installed on the upright (2; 5002), this element comprising at least one hook (15; 115; 215; 315; 4015) able to be inserted into a through hole (9) in the upright (2; 5002), this element comprising a locking pin (19; 119; 219; 319; 4019) able to be switched between a first position (figures 2 and 3), in which this locking pin (19; 119; 219; 319; 4019) does not oppose installation of the element on the upright (2; 5002) by lodging the hook, and a second position (figure 4), in which the locking pin (19; 119; 219; 319; 4019) is able to prevent the hook (15; 115; 215; 315; 4015) dislodging by going through a hole (9) in the upright (2; 5002), the hook (15; 115; 215; 315; 4015) defining an internal gradient (17) partly delimiting an open slot (18) for inserting an edge (B) of the upright (2; 5002) during lodging, **characterised in that** this internal gradient (17) extends, with reference to a supporting surface (16; 316) of the element on the upright, as far as the bottom of the open slot (18) and slopes so as to get closer to the supporting surface (16; 316) when going towards the bottom of the slot (18).

2. Assembly according to claim 1, **characterised in that** the element (3; 4; 5; 305; 4050; 6060; 6062) is made from at least one metal blank, which is shaped so as to define the hook (15; 115; 215; 315; 4015), the locking pin (19; 119; 219; 319; 4019) and at least one side (13; 113; 213; 313; 4013), which is extended by the hook (15; 115; 215; 315; 4015) and by the locking pin (19; 119; 219; 319; 4019).

3. Assembly according to any one of claims 1 and 2, **characterised in that** in its second position the locking pin (19; 119; 219; 319; 4019) projects more or less in the same direction (D₁) as the hook (15; 115; 215; 315; 4015).

4. Assembly according to claim 2, **characterised in that** the side has an edge, which forms part of a supporting surface (16; 316) on the upright and in relation to which the hook (15; 115; 215; 315; 4015) and the locking pin (19; 119; 219; 319; 4019) project.

5. Assembly according to any one of the previous claims, **characterised in that** the locking pin is in the shape of a tongue, in which a hole is drilled (20) for passing a tool for manoeuvring this pin (19; 119; 219; 319; 4019) from its first to its second position.

6. Assembly according to any one of the previous claims, **characterised in that** the hook (15; 115; 215; 315; 4015) and the locking pin (19; 119; 219; 319; 4019) are juxtaposed so as to be able to go through one and the same hole (9) in the upright (2; 5002) together.

7. Assembly according to any one of the previous claims, **characterised in that** the element (3; 4; 5; 305; 4050; 6060; 6062) comprises another hook (15; 115; 215; 4015) for installing it on the upright (2; 5002), both hooks being offset laterally from each other and projecting more or less in the same direction (D₁) .

8. Assembly according to any one of the previous claims, **characterised in that** the upright (2; 5002) comprises an elongated metal blank, which comprises at least a first and a second longitudinal fold (6) and at least a first and a second through hole (9), which are made in these first and second longitudinal folds (6) respectively and are each intended for inserting an installation hook (15; 115; 215; 315; 4015) of a detachable element (3; 4; 5; 305; 4050; 6060; 6062), the metal blank comprising at least a third longitudinal fold (6), in which a third through hole (9) is made for inserting at least one installation hook (15; 115; 215; 315; 4015) of another detachable element (3; 4; 5; 305; 4050; 6060; 6062).

9. Assembly according to claim 8, **characterised in that** the upright (2; 5002) has at least first and second external faces (7, 7'), which are connected by the first fold (6) and each of which forms a supporting surface for a detachable element (3; 4; 5; 305; 4050; 6060; 6062), which is lodged with the help of an installation hook (15; 115; 215; 315; 4051) passing through this first through hole, this first face (7, 7') being situated between the first and second folds (6), this second face (7, 7') being situated between the first and third folds (6).

10. Assembly according to any one of the previous claims, **characterised in that** the upright (2; 5002) comprises at least one notch (9) for inserting a locking pin (19; 119; 219; 319; 4019) of this detachable element (3; 4; 5; 305; 4050; 6060; 6062).

11. Assembly according to claim 10, **characterised in that** the notch is formed by this through hole (9) for inserting the installation hook (15; 115; 215; 315; 4015).

12. Assembly according to any one of claims 8 to 11, **characterised in that** the upright (2; 5002) comprises four longitudinal folds (6), in each of which at least one through hole (9) is made.

13. Assembly according to any one of claims 8 to 12, **characterised in that** the distance (e') between two consecutive folds is identical for all the folds.

14. Assembly according to any one of claims 8 to 13, **characterised in that** this through hole (9) is part of a range of identical through holes (9), which are made in the longitudinal fold (6).

15. Supporting device, **characterised in that** it comprises an assembly according to any one of the previous claims, the element being lodged on this upright (2; 5002) by its installation hook (15; 115; 215; 315; 4015), which passes through this through hole (9) in the upright.

16. Supporting device according to claim 15, **characterised in that** once the hook (15; 115; 215; 315; 4015) of the element (3; 4; 5; 305; 4050; 6060; 6062) is lodged on the edge (B), the locking pin (19; 119; 219; 319; 4019) of this element is able to be switched towards its second position, until it goes through a hole (9) in the upright (2; 5002) so as to prevent the hook (15; 115; 215; 315; 4015) from dislodging.

17. Device according to any one of claims 15 and 16, **characterised in that** the assembly is according to claim 11, the hook (15; 115; 215; 315; 4019) and the locking pin (19; 119; 219; 319; 4019) being able to go through the through hole forming a notch (9) in the upright (2; 5002) together.

18. Device according to any one of claims 15 to 17, **characterised in that** it comprises a first and a second element (3; 4; 5; 305; 4050; 6060; 6062), both elements (3; 4; 5; 305; 4050; 6060; 6062) forming part of two different categories, which are selected from brackets, crosspieces to be placed between two uprights, heads for fastening a hanging part under a structure, feet, side members and cross members, both elements being able to be installed in the same place on the upright (2; 5002) more or less in the same way, each by its hook (15; 115; 215; 315; 4015) lodging on the edge (B) of this through hole (9) and by its locking pin (19; 119; 219; 319; 4019) being inserted into a hole (9) in the upright.

19. Device according to one of claims 15 to 18, in which the assembly is according to claims 7 and 8, **characterised in that** the distance (e) between these hooks (15; 115; 215; 4019) is more or less equal to the distance (e') between the first and second folds (6).

20. Device according to claim 19, **characterised in that** this element is a crosspiece (3), the length (l₃) of which, without its hooks (15), is more or less equal to the distance (e') between two adjacent folds (6).

## Patentansprüche

1. Zusammenbau, der einen Ständer (2; 5002) einer Tragvorrichtung und mindestens ein auf dem Ständer (2; 5002) anzubringendes Element (3; 4; 5; 305; 4050; 6060; 6062) umfasst, wobei das Element mindestens einen Haken (15; 115; 215; 315; 4015) umfasst, der in der Lage ist, in ein Durchgangsloch (9) des Ständers (2; 5002) eingesetzt zu werden, wobei das Element einen Verriegelungszapfen (19; 119; 219; 319; 4019) umfasst, der dazu geeignet ist, zwischen einer ersten Lage (Figur 2 und 3), in der dieser Verriegelungszapfen (19; 119; 219; 319; 4019) sich der Befestigung des Elements auf dem Ständer (2; 5002) durch Einhaken des Hakens nicht widersetzt, und einer zweiten Lage (Figur 4) geneigt zu werden, in der der Verriegelungszapfen (19; 119; 219; 319; 4019) in der Lage ist, das Aushaken des Hakens (15; 115; 215; 315; 4015) durch Eindringen in ein Loch (9) des Ständers (2; 5002) zu verhindern, wobei der Haken (15; 115; 215; 315; 4015) eine innere Rampe (17) bestimmt, die teilweise einen offenen Schlitz (18) für das Einsetzen einer Kante (B) des Ständers (2; 5002) während des Einhakens abgrenzt, **dadurch gekennzeichnet, dass** diese innere Rampe (17) sich einer Auflagefläche (16; 316) des Elements auf dem Ständer gegenüberstehend bis zum tiefsten Teil des offenen Schlitzes (18) erstreckt und derart geneigt ist, dass sie sich bei der Führung zum tiefsten Teil des Schlitzes (18) der Auflagefläche (16; 316) annähert.

2. Zusammenbau nach Anspruch 1, **dadurch gekennzeichnet, dass** das Element (3; 4; 5; 305; 4050; 6060; 6062) ausgehend von mindestens einem Metallblech hergestellt ist, das eine derartige Formgebung aufweist, dass der Haken (15; 115; 215; 315; 4015), der Verriegelungszapfen (19; 119; 219; 319; 4019) und mindestens ein Flügel (13; 113; 213; 313; 4013) bestimmt werden, der sich durch den Haken (15; 115; 215; 315; 4015) und durch den Verriegelungszapfen (19; 119; 219; 319; 4019) ausdehnt.

3. Zusammenbau nach einem der Ansprüche 1 und 2, **dadurch gekennzeichnet, dass** der Verriegelungszapfen (19; 119; 219; 319; 4019) in seiner zweiten Lage im Wesentlichen in die gleiche Richtung (D₁) wie der Haken (15; 115; 215; 315; 4015) vorspringt.

4. Zusammenbau nach Anspruch 2, **dadurch gekennzeichnet, dass** der Flügel eine Kante besitzt, die einen Teil einer Auflagefläche (16; 316) auf dem Ständer bildet und in Bezug auf die der Haken (15; 115; 215; 315; 4015) und der Verriegelungszapfen (19; 119; 219; 319; 4019) vorspringen.

5. Zusammenbau nach einem der vorhergehenden Ansprüche, **dadurch gekennzeichnet, dass** der Verriegelungszapfen die Form einer Lasche aufweist, in die ein Loch (20) für den Durchgang eines Werkzeugs zur Bewegung dieses Zapfens (19; 119; 219; 319; 4019) von seiner ersten in seine zweite Lage gebohrt ist.

6. Zusammenbau nach einem der vorhergehenden Ansprüche, **dadurch gekennzeichnet, dass** der Haken (15; 115; 215; 315; 4015) und der Verriegelungszapfen (19; 119; 219; 319; 4019) nebeneinanderliegen, derart, dass sie zusammen in ein gleiches Loch (9) des Ständers (2; 5002) eindringen können.

7. Zusammenbau nach einem der vorhergehenden Ansprüche, **dadurch gekennzeichnet, dass** das Element (3; 4; 5; 305; 4050; 6060; 6062) einen anderen Haken (15; 115; 215; 315; 4015) für seine Befestigung an dem Ständer (2; 5002) umfasst, wobei der eine und der andere Haken seitlich voneinander versetzt sind und im Wesentlichen in die gleiche Richtung (D₁) vorspringen.

8. Zusammenbau nach einem der vorhergenenden Ansprüche, **dadurch gekennzeichnet, dass** der Ständer (2; 5002) ein längliches Metallblech umfasst, das mindestens einen ersten und einen zweiten Längsumschlag (6) und mindestens ein erstes und ein zweites Durchgangsloch (9) umfasst, die im ersten beziehungsweise zweiten Längsumschlag (6) angeordnet sind und jedes für das Einsetzen eines Befestigungshakens (15; 115; 215; 315; 4015) eines Anbauelements (3; 4; 5; 305; 4050; 6060; 6062) bestimmt sind, wobei das Metallblech mindestens einen dritten Längsumschlag (6) umfasst, in dem ein drittes Durchgangsloch (9) für das Einsetzen mindestens eines Befestigungshakens (15; 115; 215; 315; 4015) eines anderen Anbauelements (3; 4; 5; 305; 4050; 6060; 6062) angeordnet ist.

9. Zusammenbau nach Anspruch 8, **dadurch gekennzeichnet, dass** der Ständer (2; 5002) mindestens eine erste und eine zweite Außenseite (7, 7') umfasst, die durch den ersten Umschlag (6) verbunden sind und von denen jede eine Auflagefläche für ein Anbauelement (3; 4; 5; 305; 4050; 6060; 6062) bildet, das mittels eines Befestigungshakens (15; 115; 215; 315; 4015) eingehakt ist, der das erste Durchgangsloch durchquert, wobei die erste Seite (7, 7') sich zwischen dem ersten und dem zweiten Umschlag (6) befindet, wobei die zweite Seite (7, 7') sich zwischen dem zweiten und dem dritten Umschlag (6) befindet.

10. Zusammenbau nach einem der vorhergehenden Ansprüche, **dadurch gekennzeichnet, dass** der Ständer (2; 5002) mindestens eine Kerbe (9) für das Einsetzen eines Verriegelungszapfens (19; 119; 219; 319; 4019) des Anbauelements (3; 4; 5; 305; 4050; 6060; 6062) umfasst.

11. Zusammenbau nach Anspruch 10, **dadurch gekennzeichnet, dass** die Kerbe durch das Durchgangsloch (9) für das Einsetzen des Befestigungshakens (15; 115; 215; 315; 4015) gebildet ist.

12. Zusammenbau nach einem der Ansprüche 8 bis 11, **dadurch gekennzeichnet, dass** der Ständer (2; 5002) vier Längsumschläge (6) umfasst, in denen jeweils mindestens ein Durchgangsloch (9) angeordnet ist.

13. Zusammenbau nach einem der Ansprüche 8 bis 12, **dadurch gekennzeichnet, dass** der Abstand (e') zwischen zwei aufeinanderfolgenden Umschlägen für alle Umschläge identisch ist.

14. Zusammenbau nach einem der Ansprüche 8 bis 13, **dadurch gekennzeichnet, dass** das Durchgangsloch (9) Teil einer Reihe identischer Durchgangslöcher (9) ist, die im Längsumschlag (6) angeordnet sind.

15. Tragvorrichtung, **dadurch gekennzeichnet, dass** sie einen Zusammenbau nach einem der vorhergehenden Ansprüche umfasst, wobei das Element durch seinen Befestigungshaken (15; 115; 215; 315; 4015), der das Durchgangsloch (9) des Ständers durchquert, im Ständer (2; 5002) eingehakt wird.

16. Tragvorrichtung nach Anspruch 15, **dadurch gekennzeichnet, dass** der Verriegelungszapfen (19; 119; 219; 319; 4019) des Elements, nachdem der Haken (15; 115; 215; 315; 4015) des Elements (3; 4; 5; 305; 4050; 6060; 6062) an der Kante (B) eingehakt wurde, in der Lage ist, in seine zweite Lage geneigt zu werden, bis er in ein Loch (9) des Ständers (2; 5002) eindringt, derart, dass das Aushaken des Hakens (15; 115; 215; 315; 4015) verhindert wird.

17. Vorrichtung nach einem der Ansprüche 15 und 16, **dadurch gekennzeichnet, dass** der Zusammenbau nach Anspruch 11 ist, wobei der Haken (15; 115; 215; 315; 4015) und der Verriegelungszapfen (19; 119; 219; 319; 4019) in der Lage sind, zusammen in das Durchgangsloch einzudringen, das die Kerbe (9) des Ständers (2; 5002) bildet.

18. Vorrichtung nach einem der Ansprüche 15 bis 17, **dadurch gekennzeichnet, dass** sie ein erstes und ein zweites Element (3; 4; 5; 305; 4050; 6060; 6062) umfasst, wobei das eine und das andere Element (3; 4; 5; 305; 4050; 6060; 6062) Teil von zwei unterschiedlichen Kategorien sind, die unter Konsolen, zwischen den zwei Ständern anzuordnenden Distanzstücken, Köpfen zur Befestigung eines Hängestiels unter einer Struktur, Füßen, Längsträgern und Querträgern ausgewählt werden, wobei das eine und das andere Element in der Lage sind, jedes durch Einhaken seines Hakens (15; 115; 215; 315; 4015) an der Kante (B) des Durchgangslochs (9) und durch Einsetzen seines Verriegelungszapfens (19; 119; 219; 319; 4019) in ein Loch (9) des Ständers am gleichen Ort und im Wesentlichen auf die gleiche Weise auf dem Ständer (2; 5002) befestigt zu werden.

19. Vorrichtung nach einem der Ansprüche 15 bis 18, wobei der Zusammenbau nach den Ansprüchen 7 und 8 ist, **dadurch gekennzeichnet, dass** die Distanz (e) zwischen den Haken (15; 115; 215; 315; 4015) im Wesentlichen gleich dem Abstand (e') zwischen dem ersten und dem zweiten Umschlag (6) ist.

20. Vorrichtung nach Anspruch 19, **dadurch gekennzeichnet, dass** das Element ein Distanzstück (3) ist, dessen Länge (l₃) außer seinen Haken (15) im Wesentlichen gleich dem Abstand (e') zwischen zwei benachbarten Umschlägen (6) ist.
